# EUROPÄISCHE PATENTSCHRIFT

(11) **EP 2 551 712 B1**
(45) Veröffentlichungstag und Bekanntmachung des Hinweises auf die Patenterteilung: **04.09.2019**
(21) Anmeldenummer: 12175136.6
(22) Anmeldetag: 05.07.2012
(51) Int. Cl.: G02B 21/08, G02B 21/16, G02B 5/22

(54) **Mikroskopbeleuchtungsverfahren und Mikroskop**
Mikroscope illumination method and microscope
Procédé d'éclairage de microscope et microscope

(30) Priorität: 27.07.2011 DE 102011079942
(43) Veröffentlichungstag der Anmeldung: 30.01.2013
(73) Patentinhaber: Leica Microsystems CMS GmbH, 35578 Wetzlar (DE)
(72) Erfinder: Weiß, Albrecht, 35440 Linden (DE)
(74) Vertreter: Grunert, Marcus

(56) Entgegenhaltungen:
- EP-A1- 1 785 761
- EP-A2- 0 510 329
- DE-A1-102007 022 666
- US-A1- 2003 202 238
- US-A1- 2009 212 242

## Beschreibung

Die vorliegende Erfindung betrifft ein Mikroskopbeleuchtungsverfahren sowie ein Mikroskopsystem zur Untersuchung einer Probe in Durchlicht-Hellfeldbeleuchtung oder Auflicht-Fluoreszenzbeleuchtung.

### Stand der Technik

In der Zytodiagnostik und in der Pathologie werden eingefärbte Proben mit einem Mikroskop meist in Durchlicht-Hellfeldbeleuchtung untersucht. Für die Diagnose ist die Farbe der mikroskopisch untersuchten Probe ein wichtiges Kriterium. Bei anderen mikroskopischen Untersuchungen beispielsweise mit Kontrastierverfahren, wie Phasenkontrast oder Differentieller Interferenzkontrast (DIC), ist die Farbe der Probe weniger von Bedeutung. Mit solchen Kontrastierverfahren werden ungefärbte Proben untersucht, die sich in der Durchlicht-Hellfeldmikroskopie als überwiegend transparent darstellen. Die Kontrastierverfahren dienen dann dazu, Phaseneigenschaften der Probe sichtbar zu machen.

Eine weitere bekannte Untersuchungsmethode stellt die Fluoreszenzmikroskopie dar. Hier wird mittels eines Auflichtbeleuchtungsstrahlengangs, der einen sogenannten Anregungsfilter durchquert, die zu untersuchende Probe beleuchtet. Das Anregungslicht führt zu Fluoreszenzen im eingefärbten Objekt, wobei das abgestrahlte Fluoreszenzlicht das entstehende Mikroskopbild der Probe bestimmt. Die genannten Mikroskopieverfahren sind an sich seit längerem bekannt. Zu weiteren Details wird auf den vorhandenen Stand der Technik verwiesen.

Als Beleuchtungsmittel im Mikroskop, etwa für die Durchlicht-Hellfeldbeleuchtung, wurden in den letzten Jahrzehnten Halogenlampen eingesetzt. Das von der Halogenlampe abgegebene Licht entspricht überwiegend dem kontinuierlichen Spektrum eines schwarzen Strahlers (Planckscher Strahler). Meist wird in ein Lampenhaus mit Halogenlampe noch ein Wärmeschutzfilter eingebaut, das den Infrarotbereich der emittierten Strahlung stark abschwächt. Als Wärmeschutzfilter wird häufig ein Absorptionsglas (KG1 mit Dicke 2 mm) eingesetzt. Das kontinuierliche Spektrum der sich ergebenden Beleuchtung erlaubt eine sichere Farbbeurteilung durch den Benutzer.

Für die Beurteilung von Farben bei Beleuchtung mit einer bestimmten Lichtquelle ist der sogenannte Farbwiedergabeindex (engl. Colour Rendering Index, CRI) von Bedeutung. Hierunter versteht man eine fotometrische Größe, mit der sich die Qualität der Farbwiedergabe von Lichtquellen gleicher korrelierter Farbtemperatur beschreiben lässt. Als Referenz zur Beurteilung der Wiedergabequalität dient bis zu einer Farbtemperatur von 5.000 K das Licht, das von einem schwarzen Strahler der entsprechenden Farbtemperatur abgegeben wird. Über eine Farbtemperatur von 5.000 K hinaus wird eine tageslichtähnliche Spektralverteilung als Referenz herangezogen. Beispielsweise wird für die Berechnung der Farbwiedergabe einer Haushaltsglühlampe, die selbst in guter Näherung ein Planckscher Strahler ist, das Spektrum eines schwarzen Strahlers mit einer Temperatur von 2.700 K verwendet. Jede Lichtquelle, die das Spektrum eines schwarzen Strahlers gleicher (korrelierter) Farbtemperatur im Bereich der sichtbaren Wellenlängen perfekt nachbildet, erreicht einen Farbwiedergabeindex von 100. Halogenlampen können ähnlich wie Glühlampen Farbwiedergabeindizes von bis zu 100 erreichen.

In der Mikroskopie wird die Halogenlampe mehr und mehr durch Leuchtdioden (im Folgenden LEDs) mit ihren bekannten Vorteilen ersetzt. Diese Vorteile umfassen eine höhere Lichtabstrahlung bei geringerem Verbrauch elektrischer Leistung sowie eine längere Lebensdauer. Für die Durchlichtbeleuchtung werden überwiegend weiße LEDs eingesetzt. Bei einer weißen Standard-LED wird eine blaue oder eine UV-LED mit fotolumineszierendem Material kombiniert. Meist gelangt eine blaue LED zum Einsatz, die mit einem gelben Leuchtstoff kombiniert wird. Auch UV-LEDs mit mehreren verschiedenen Leuchtstoffen (meist rot, grün und blau) können Verwendung finden. Nach den Prinzipien der additiven Farbmischung wird mit solchen LEDs weißes Licht erzeugt. Die so gefertigten Bauteile verfügen über gute Farbwiedergabeeigenschaften, wobei die Farbwiedergabeindizes zwischen 70 und 90 liegen. Allerdings geben die weißen LEDs kein kontinuierliches Spektrum ab. Die auf blauen LEDs basierenden Weißlicht-LEDs haben eine starke Emission im blauen Spektralbereich (bei ca. 450 nm), ein Minimum im blaugrünen (bei etwa 500 nm) und einen breiteren Emissionsbereich zu höheren Wellenlängen mit einem Maximum beim etwa 550 nm, der bei etwa 650 nm stark abfällt.

Das Verhältnis von Intensitätsminimum bei 500 nm zum Intensitätsmaximum bei etwa 450 nm liegt je nach LED-Typ bei ca. 10-20%. Mit einem solchen nicht-kontinuierlichen Spektrum als Probenbeleuchtung ist die Farbbeurteilung schwieriger und weicht von den Erfahrungswerten, wie sie bei der Mikroskopbeleuchtung mit einer Halogenlampe gewonnen wurden, ab.

Die EP 1 785 761 A1 offenbart ein Mikroskop mit einem in Auflicht arbeitenden optischen Scansystem, das beispielsweise ein konfokales Scansystem sein kann. Das Mikroskop umfasst weiterhin ein optisches Anregungssystem (Fluoreszenzsystem), das in Durchlicht arbeitet. Zur Untersuchung eines Objekts scannt ein Laser des konfokalen Scansystems ein gefärbtes Objekt zweidimensional ab und ein zweidimensionales Bild wird erzeugt. Gleichzeitig kann durch Öffnen eines Shutters des Fluoreszenzsystems das gesamte Objektfeld mit Anregungslicht bestrahlt werden. Auf diese Weise ist durch Ansteuerung des Shutters eine Synchronisation dahingehend möglich, dass eine optische Anregung zum Zeitpunkt der gewünschten Objektbetrachtung vorgenommen wird.

Die EP 0 510 329 A2 behandelt eine Fotografieeinrichtung für Mikroskope, mit der eine Probe mittels Bildüberlagerung gleichzeitig in Auflicht-Fluoreszenzbeleuchtung als auch in Durchlicht-Hellfeldbeleuchtung beobachtet werden kann. Hierzu wird zunächst die Bildhelligkeit für die Durchlichtbeleuchtung an diejenige für die Auflichtbeleuchtung angepasst. Hierzu wird zunächst ein erster Shutter im Auflichtbeleuchtungsstrahlengang geöffnet, um die Bildhelligkeit des durch Auflichtbeleuchtung erzeugten Bildes mit einem lichtempfindlichen Element zu messen. Wenn ein gewünschter Belichtungswert erreicht ist, wird der erste Shutter geschlossen und der gemessene Belichtungswert abgespeichert. Anschließend wird ein zweiter Shutter im Durchlichtbeleuchtungsstrahlengang geöffnet und die Bildhelligkeit des entsprechend erzeugten Durchlichtbeleuchtungsbildes wird wiederum durch das lichtempfindliche Element gemessen. Sobald der gespeicherte Helligkeitswert des ersten (Auflicht-) Bildes erreicht ist, wird der zweite Shutter geschlossen, so dass eine zweifache-belichtete Fotographie mit einem Auflicht- und einem Durchlichtbild gleicher Helligkeiten erzeugt werden kann.

Ein spezielles Problem ergibt sich bei der bereits einleitend angesprochenen Fluoreszenzmikroskopie. Ist bei der bereits behandelten Durchlicht-Hellfeldmikroskopie zusätzlich die Möglichkeit einer Fluoreszenzmikroskopie gegeben, haben die Erfinder folgenden Effekt festgestellt: Ein großer Teil des Anregungslichts für die Fluoreszenz-Anregung geht durch die Probe hindurch und gelangt über die Durchlichtbeleuchtungsachse bis zur Durchlichtbeleuchtungsquelle. Wird hier eine Weißlicht-LED eingesetzt, so führt blaues Anregungslicht zur Anregung des gelbgrünen Konversionsfarbstoffs in der weißen LED, so dass gelbgrünes Licht wiederum über die Durchlichtbeleuchtungsachse zur Probe gelangt. Dies wird als störender Untergrund im Fluoreszenzbild wahrgenommen und kann die eigentliche Fluoreszenz aus der Probe stark überdecken. Dieser Effekt tritt auch bei ausgeschalteter Weißlicht-LED auf.

Der vorliegenden Erfindung liegt folglich die Aufgabe zugrunde, die Untersuchung einer Probe mit einem Mikroskop in Durchlicht-Hellfeldbeleuchtung oder in Auflicht-Fluoreszenzbeleuchtung zu verbessern und dabei die Störstrahlung im Fluoreszenzbild zu reduzieren.

### Offenbarung der Erfindung

Die vorliegende Erfindung betrifft ein Verfahren zur Beleuchtung einer Probe mit einem Mikroskop, wobei die Probe in Durchlicht-Hellfeldbeleuchtung oder in Auflicht-Fluoreszenzbeleuchtung untersucht wird, gemäß Anspruch 1. Weiterhin betrifft die Erfindung ein geeignetes Mikroskop gemäß Anspruch 5.

Vorteilhafte Ausgestaltungen und Vorteile der Erfindung ergeben sich aus den jeweiligen Unteransprüchen und der nachfolgenden Beschreibung sowie der beiliegenden Zeichnung.

### Vorteile der Erfindung

Erfindungsgemäß wird vorgeschlagen, als Lichtquelle für die Durchlicht-Hellfeldbeleuchtung eine Weißlicht-LED zu verwenden und bei aktivierter Auflicht-Fluoreszenzbeleuchtungseinrichtung einen Shutter an einem Ort des Beleuchtungsstrahlengangs der Durchlicht-Hellfeldbeleuchtungseinrichtung zwangsweise einzuschalten und diesen Shutter bei aktivierter Durchlicht-Hellfeldbeleuchtungseinrichtung zwangsweise auszuschalten.

Mit dem Ausdruck "Einschalten eines Shutters an einem Ort des Beleuchtungsstrahlengangs der Durchlicht-Hellfeldbeleuchtung" soll umfasst sein, dass der Shutter ("Verschluss") auf der Durchlicht-Beleuchtungsachse angeordnet ist oder dorthin eingebracht wird, um seine Funktion des Abblendens zu erfüllen und somit die Beleuchtungsachse vollständig für ein Durchqueren von Licht zu blockieren. Es sind auch elektromechanische oder elektrooptische Shutter denkbar, die dauerhaft auf der Durchlicht-Beleuchtungsachse angeordnet sind und ein- bzw. ausgeschaltet werden können. "Einschalten" meint eine Unterbrechung des Beleuchtungsstrahlengangs, "Ausschalten" meint ein möglichst ungehindertes Durchtreten von Licht an dem Ort des angeordneten Shutters. Der Shutter ist auf der Durchlichtbeleuchtungsachse zwischen Probe und Weißlicht-LED angeordnet bzw. anordenbar.

Bekannte Shutter umfassen insbesondere ein- und ausschwenkbare Blenden ohne Blendenöffnung, Irisblenden, die insbesondere elektronisch zwischen einer Stellung mit Blendenöffnung und einer Stellung ohne Blendenöffnung umschaltbar sind, und schließlich andere Formen elektrooptischer Shutter, beispielsweise transmissive Displays, die zwischen einem Modus maximaler Transmissivität und einen Modus minimaler Transmissivität umgeschaltet werden können.

Während bei der früher üblichen Durchlichtbeleuchtung mit Halogenlampen als Lichtquelle der Einsatz von Shuttern zum schnellen Ein- und Ausschalten der Lichtquelle zweckmäßig sein konnte, ist seit dem Einsatz von LEDs als Lichtquelle der Einsatz von Shuttern zu diesem Zweck obsolet geworden, da LEDs sehr schnell schaltbar sind. Mit vorliegender Erfindung wird bei der dargestellten Beleuchtungskonstellation ein solcher Shutter, wenngleich zu einem gänzlich anderen Zweck, wieder in das Beleuchtungssystem integriert.

Erfindungsgemäß wird bei der Auflicht-Fluoreszenzbeleuchtung besagter Shutter zwangsweise an einen Ort des Beleuchtungsstrahlengangs der Durchlicht-Hellfeldbeleuchtung eingebracht bzw. dort eingeschaltet. Es sei hervorgehoben, dass der Shutter auch dann an den Ort des Beleuchtungsstrahlengangs der Durchlicht-Hellfeldbeleuchtung eingebracht bzw. dort eingeschaltet wird, wenn die Lichtquelle für die Durchlichtbeleuchtung, also die Weißlicht-LED, ausgeschaltet ist.

Da, wie eingangs erwähnt, ein großer Teil des (blauen) Anregungslichtes der Fluoreszenzbeleuchtung bei Fluoreszenz-Anregung der Probe durch diese hindurchgeht und über die Durchlichtbeleuchtungsachse bis zur Weißlicht-LED gelangt und dort auch bei ausgeschalteter Weißlicht-LED den gelbgrünen Konversionsfarbstoff anregt, so dass gelbgrünes Licht erzeugt wird, kann der zwischen Probe und Weißlicht-LED auf der Durchlichtbeleuchtungsachse angeordnete Shutter diesen Mechanismus vollständig unterbrechen und auf diese Weise bereits die Anregung des gelbgrünen Konversionsfarbstoffs in der Weißlicht-LED wirksam verhindern. Erfindungsgemäß kann somit der aufgrund dieses gelbgrünen Lichts erzeugte störende Untergrund im Fluoreszenzbild vollständig beseitigt werden.

Es ist zweckmäßig, den Shutter an einem Ort unmittelbar vor der Weißlicht-LED einzuschalten. "Unmittelbar vor" soll heißen, dass sich keine weiteren Objekte zwischen Shutter und Weißlicht-LED befinden, und dass der Shutter in sinnvoller und größtmöglicher Nähe zur Weißlicht-LED angeordnet ist, um jeden von dieser LED ausgehenden bzw. auf diese einfallenden Strahlengang zu blockieren. Bei einer solch nahen Anordnung des Shutters kann die Größe des Shutters bis hinunter auf nahezu die Größe des Chips der Weißlicht-LED verringert werden. Eine kleine Größe eines mechanischen Shutters, also der beispielsweise einzuschwenkenden Blende, ist vorteilhaft, da der Shutter dann sehr schnell bewegt und betrieben werden kann, ohne große Massen zu bewegen. Dies ermöglicht dann schließlich ein wartungsfreies und schnelles Ein- und Ausschalten des Shutters.

Als Größe des Shutters kann mindestens die einfache bis doppelte Größe des Chips der Weißlicht-LED gewählt werden. Der Shutter wird dann auf der Durchlichtbeleuchtungsachse entsprechend seiner Größe in einem entsprechenden Abstand zur Weißlicht-LED angeordnet, so dass er den Beleuchtungsstrahlengang der Durchlicht-Hellfeldbeleuchtung vollständig verschließt bzw. abblendet. Bei einer solchen Anordnung ist dann auch sichergestellt, dass entlang der Durchlichtbeleuchtungsachse sich ausbreitendes Anregungslicht aus der Auflicht-Fluoreszenzbeleuchtung nicht bis zur Weißlicht-LED der Durchlicht-Hellfeldbeleuchtung vordringen kann.

Es ist zweckmäßig, wenn der Shutter mittels einer mechanischen Zwangskopplung automatisch ein- oder ausgeschaltet wird. Die Auflicht-Fluoreszenzbeleuchtungseinrichtung steht bei ihrem Aktivieren dann in mechanischer Wirkverbindung mit dem Shutter, der dann automatisch eingeschaltet wird. Umgekehrt wird beim Aktivieren der Durchlicht-Hellfeldbeleuchtungseinrichtung durch entsprechende mechanische Zwangskopplung dieser Shutter automatisch ausgeschaltet.

Das zwangsweise Ausschalten des Shutters kann allgemein auch alternativ dann erfolgen, wenn die Auflicht-Fluoreszenzbeleuchtungseinrichtung abgeschaltet wird.

Es ist sinnvoll, den Shutter mittels eines Motors zu betreiben, der den Shutter zwangsweise ein- bzw. ausschaltet. Hierzu kann beispielsweise eine Art Kelle an der Motorachse befestigt sein. Der Motor erzeugt dann eine kleine Drehbewegung zwischen den beiden Endpositionen "Shutter eingeschaltet" und "Shutter ausgeschaltet". Wie weiter unten in Zusammenhang mit einem erfindungsgemäßen Mikroskopsystem erläutert, ist eine Steuerung über ein Steuergerät besonders vorteilhaft.

Weiterhin ist hier ein nicht beanspruchtes Lampenhaus für die Beleuchtung einer Probe in einem Mikroskop beschrieben, bei welchem die Probe sowohl in Durchlicht-Hellfeldbeleuchtung als auch alternativ in Auflicht-Fluoreszenzbeleuchtung untersuchbar ist. Das Lampenhaus umfasst eine Weißlicht-LED als Lichtquelle für die Durchlicht-Hellfeldbeleuchtung und einen Shutter, wobei der Shutter an einem Ort des Beleuchtungsstrahlengangs der Durchlicht-Hellfeldbeleuchtung ein- bzw. ausschaltbar angeordnet ist. Das Lampenhaus ist wie üblich zur Einkoppelung des Beleuchtungsstrahlengangs der Durchlicht-Hellfeldbeleuchtung an das Mikroskop anschließbar.

Schließlich betrifft die Erfindung ein Mikroskop zur Untersuchung einer Probe in Durchlicht-Hellfeldbeleuchtung oder in Auflicht-Fluoreszenzbeleuchtung, wobei beide Möglichkeiten zumindest alternativ mit diesem Mikroskop durch einfaches Umschalten der entsprechenden Beleuchtungseinheiten realisierbar sind. Das Mikroskop weist hierzu eine Durchlicht-Hellfeldbeleuchtungseinrichtung sowie eine Auflicht-Fluoreszenzbeleuchtungseinrichtung auf. Als Lichtquelle für die Durchlicht-Hellfeldbeleuchtungseinrichtung ist eine Weißlicht-LED vorhanden. Weiterhin ist ein Shutter an einem Ort des Beleuchtungsstrahlengangs der Durchlicht-Hellfeldbeleuchtungseinrichtung bei Untersuchung der Probe in Auflicht-Fluoreszenzbeleuchtung zwangsweise einschaltbar, während der Shutter bei Untersuchung der Probe in Durchlicht-Hellfeldbeleuchtung zwangsweise ausschaltbar ist.

Bezüglich der Vorteile und möglicher Ausgestaltungen eines solchen Mikroskops sei allgemein auf die obigen Ausführungen verwiesen. Insbesondere ist es vorteilhaft, ein Lampenhaus vorzusehen, in dem zumindest Teile der Durchlicht-Hellfeldbeleuchtungseinrichtung untergebracht sind. Ein solches Lampenhaus umfasst sinnvollerweise die Weißlicht-LED und den Shutter. Eventuell ist im Lampenhaus außerdem eine Beleuchtungsoptik zur Kollimation des DurchlichtBeleuchtungsstrahlengangs untergebracht. Das Lampenhaus ist in üblicher Weise mit dem Mikroskop zur Einkoppelung des Durchlichtbeleuchtungsstrahlengangs verbindbar.

Wie bereits ausgeführt, ist es sinnvoll, den Shutter über einen Motor zu betreiben, der sinnvollerweise auch im Lampenhaus untergebracht sein kann.

Besonders vorteilhaft ist die Umsetzung des erfindungsgemäßen Verfahrens in einem solchen Mikroskopsystem mit Hilfe eines Steuergeräts. Hierzu ist das Steuergerät zum einen mit der Auflicht-Fluoreszenzbeleuchtungseinrichtung und zum anderen mit der Durchlicht-Hellfeldbeleuchtungseinrichtung bzw. insbesondere mit dem Lampenhaus verbunden. Auf diese Weise kann das Steuergerät das Einschalten der Auflicht-Fluoreszenzbeleuchtungseinrichtung registrieren und daraufhin den insbesondere motorbetriebenen Shutter einschalten. Beim Ausschalten der Auflicht-Fluoreszenzbeleuchtungseinrichtung oder alternativ erst beim Einschalten der Weißlicht-LED der Durchlicht-Hellfeldbeleuchtungseinrichtung kann das Steuergerät dann den insbesondere motorbetriebenen Shutter ausschalten. Der beschriebene Steuermechanismus kann selbstverständlich auch bei nicht-motorbetriebenen Shuttern, wie den bereits erwähnten elektrooptischen Shuttern, realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

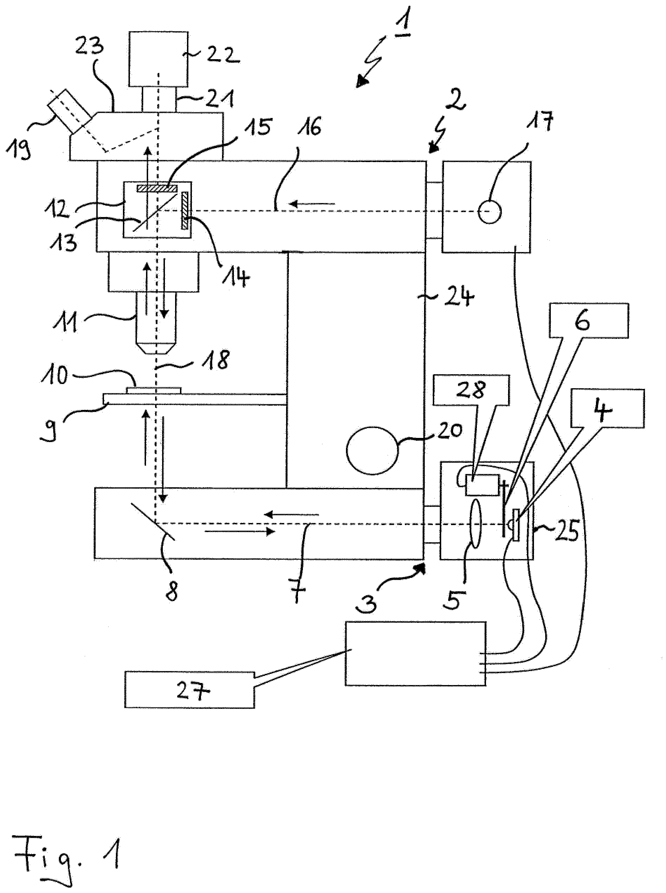

- Figur 1: zeigt eine Ausgestaltung eines erfindungsgemäßen Mikroskops.

Die einzige Figur 1 zeigt eine Ausgestaltung eines erfindungsgemäßen Mikroskops 1 in schematischer Ansicht mit seinen wesentlichen Komponenten, wobei das Mikroskopsystem 1 zur Untersuchung einer Probe 10 in Auflicht-Fluoreszenzbeleuchtung und in Durchlicht-Hellfeldbeleuchtung ausgelegt ist, wobei üblicherweise zwischen den beiden Beleuchtungsarten gewechselt wird.

Die Auflicht-Fluoreszenzbeleuchtungseinrichtung 2 umfasst folgende Komponenten: Eine Auflichtbeleuchtungslichtquelle 17, beispielsweise eine Quecksilber-Dampflampe, sowie einen Fluoreszenzfilterblock 12, die auf der Auflichtbeleuchtungsachse 16 angeordnet sind. Der Fluoreszenzfilterblock 12 enthält einen Anregungsfilter 14, in Ausbreitungsrichtung des Auflichtbeleuchtungslichts gefolgt von einem Strahlteiler 13. Das Anregungsfilter 14 dient zur Selektion eines oder mehrerer Wellenlängenbereiche, die zur Anregung von Fluoreszenzen in der Probe 10 geeignet sind. Der Strahlteiler 13 lenkt das durch das Filter transmittierte Anregungslicht in Richtung Probe 10 um. Weiterhin ist ein Sperrfilter 15 im Fluoreszenzfilterblock 12 vorhanden. Das Sperrfilter 15 sorgt dafür, dass nur von der Probe emittiertes Fluoreszenzlicht zum Betrachter gelangt und blockt somit das Anregungslicht.

Die Durchlicht-Hellfeldbeleuchtungseinrichtung 3 umfasst folgende Komponenten: Eine Weißlicht-LED 4 als Lichtquelle gefolgt von einer Beleuchtungsoptik 5 zur Kollimation des Beleuchtungslichts und schließlich ein unterhalb der Probe 10 angeordneter Umlenkspiegel 8. Auf der Durchlichtbeleuchtungsachse 7 ist außerdem ein Shutter 6 anordenbar, wobei der Shutter 6 zwischen Weißlicht-LED 4 und Probe 10, insbesondere zwischen Weißlicht-LED 4 und Umlenkspiegel 8, besonders vorteilhafterweise aber unmittelbar vor der Weißlicht-LED, hier also zwischen Weißlicht-LED 4 und Beleuchtungsoptik 5, angeordnet ist. Im dargestellten Fall befindet sich der Shutter unmittelbar vor der Weißlicht-LED 4 auf der Durchlichtbeleuchtungsachse 7 und blendet somit von der Weißlicht-LED kommendes Licht vollständig ab. Weiterhin sind einige Komponenten der Durchlicht-Hellfeldbeleuchtungseinrichtung 3 in der Ausführungsform gemäß Figur 1 in einem Lampenhaus 25 untergebracht. Hierzu zählen insbesondere die Komponenten Weißlicht-LED und Shutter 6. Bei einem motorbetriebenen Shutter ist es sinnvoll, auch den Motor 28 im Lampenhaus 25 unterzubringen. Im dargestellten Fall ist außerdem die Beleuchtungsoptik 5 im Lampenhaus untergebracht. Das Lampenhaus 25 lässt sich über eine geeignet geformte Schnittstelle zur Einkoppelung des Durchlichtbeleuchtungsstrahlengangs in das Mikroskop 1 mit dem Mikroskop 1 verbinden.

Weitere bekannte übliche Komponenten eines Mikroskops 1 sind der Mikroskoptisch 9 mit der darauf befindlichen Probe 10, wobei der Mikroskoptisch 9 mittels eines am Stativ 24 des Mikroskops angebrachten Fokussierknopfs 20 in z-Richtung, also parallel zur optischen Achse 18, zu Fokussierzwecken verstellbar ist. Weiterhin dargestellt ist ein Mikroskopobjektiv 11, der Mikroskoptubus 23 sowie ein Okular 19; schließlich ein Kameraport 21 mit angeschlossener Kamera 22. Das Objektiv 11 kann Bestandteil eines Objektivrevolvers sein, der mehrere unterschiedliche Objektive trägt. Der Tubus 23 weist in seinem Inneren Umlenkprismen auf, die der Übersichtlichkeit halber hier nicht dargestellt sind, und die dazu dienen, die Strahlengänge des Mikroskops zum Beobachter und zur Kamera 22 zu lenken.

Der von der Auflicht-Fluoreszenzbeleuchtungseinrichtung 2 erzeugte Auflichtbeleuchtungsstrahlengang mit seiner Achse 16 breitet sich entlang der in Figur 1 dargestellten Pfeile aus: Zunächst durchquert er das Anregungsfilter 14, um vom Strahlteiler 13 in Richtung Probe 10 gelenkt zu werden. In der Probe werden Fluoreszenzen angeregt, wobei jedoch tatsächlich der Hauptteil des Anregungslichts die Probe 10 passiert und sich entlang der Durchlichtbeleuchtungsachse 7 in die Durchlicht-Hellfeldbeleuchtungseinrichtung 3 ausbreitet. Über den Umlenkspiegel 8 gelangt das Anregungslicht entlang der Durchlichtbeleuchtungsachse 7 in das Lampenhaus 25, also insbesondere über die Beleuchtungsoptik 5 auf die Weißlicht-LED 4.

Insbesondere bei Filtersystemen 12 für Blauanregung (z. B. für Fluorochrome wie FITC oder GFP) ist dieses blaue Anregungslicht hervorragend dazu geeignet, den Konversionsfarbstoff in der Weißlicht-LED anzuregen, der dann im gelbgrünen Bereich Licht emittiert. Dieses Licht (wiederum dargestellt durch Pfeile) breitet sich entlang der Durchlichtbeleuchtungsachse 7 in Richtung Umlenkspiegel 8 aus und gelangt von dort auf die Probe 10. Das gelb-grüne Licht gelangt von der Probe 10 über das Objektiv 11 zum Fluoreszenzfilterblock 12 und kann das Sperrfilter 15 passieren und somit das Okular 19 oder die Kamera 22 erreichen. Ohne Gegenmaßnahmen macht sich dieser Effekt als gelb-grüner Untergrund im Fluoreszenzbild sehr störend bemerkbar.

Aufgrund des einschaltbaren Shutters 6 gelingt es, den störenden gelb-grünen Untergrund im Fluoreszenzbild zu beseitigen, wenn bei der Fluoreszenzlichtbeleuchtung der Shutter 6 eingeschaltet wird, um die Weißlicht-LED 4 vollständig abzublenden, also vor Bestrahlung mit blauem Anregungslicht zu schützen.

Hierzu wird im Falle der Fluoreszenzbeleuchtung der Shutter 6 auf der Durchlichtbeleuchtungsachse 7 angeordnet. Idealerweise ist zur Steuerung ein Steuergerät 27 vorgesehen, das mit der Fluoreszenz-Auflichtbeleuchtungseinrichtung 2 sowie allgemein mit der Durchlicht-Hellfeldbeleuchtungseinrichtung 3, spezieller mit dem Lampenhaus 25, in Wirkverbindung steht. Hierdurch kann das Einschalten der Lichtquelle 17 der Auflicht-Fluoreszenzbeleuchtungseinrichtung 2 detektiert werden. Hierauf steuert das Steuergerät 27 den Motor 28 an, der den Shutter 6 betreibt. Es wird dem Motor 28 ein Signal zugeführt, das dazu dient, den Shutter 6 auf der Durchlichtbeleuchtungsachse 7 zu positionieren. Auf diese Weise ist die Weißlicht-LED 4 vor einer Bestrahlung mit blauem Anregungslicht, das durch die Probe 10 dringt, geschützt. Andererseits ist selbstverständlich auch beim Einschalten der Weißlicht-LED 4 eine Ausbreitung des Durchlichtstrahlengangs entlang der Durchlichtbeleuchtungsachse nach dem Shutter 6 nicht mehr möglich.

Das Steuergerät 27 ist weiterhin mit dem Lampenhaus 25, insbesondere der Weißlicht-LED 4 oder eine speziell für diese Weißlicht-LED 4 vorgesehene Steuerung, verbunden. Hierdurch kann das Einschalten der Weißlicht-LED 4 detektiert werden. Beispielsweise kann bei eingeschalteter Weißlicht-LED 4 der Shutter 6 über ein entsprechendes Signal an den Motor 28 von der Durchlichtbeleuchtungsachse 7 entfernt werden, um den Durchlichtbeleuchtungsstrahlengang freizugeben. In einer anderen Option kann dies erst dann erfolgen, wenn sowohl die Weißlicht-LED 4 angeschaltet als auch die Lichtquelle 17 ausgeschaltet ist. Ist der Shutter 6 von der Durchlichtbeleuchtungsachse 7 entfernt, so kann sich der Durchlichtbeleuchtungsstrahlengang über die Beleuchtungsoptik 5 und den Umlenkspiegel 8 bis hin zur Probe 10 ausbreiten.

Bei der in Figur 1 dargestellten Anordnung des Shutters 6 unmittelbar vor der Weißlicht-LED 4 ist es möglich, die Größe des Shutters, also beispielsweise einer kellenförmigen Blende, auf das Ein- bis Zweifache, insbesondere mindestens auf das 1,1- bis 1,5-fache der Größe des lichtemittierenden Chips auf der Weißlicht-LED 4 zu begrenzen. Dies ermöglicht also sehr kleine wirksame Shutterflächen, die in Folge dessen auch leicht von einem Motor 28 betrieben werden können. Alternativ kann anstelle der Anordnung Shutter 6 und Motor 28 ein elektrooptisches transmissives Display vorgesehen sein, das beispielsweise unmittelbar vom Steuergerät 27 angesteuert wird. Auf diesem Display kann in der Funktion "Shutter ausgeschaltet" eine entsprechende Öffnung für den ungehinderten Durchtritt des Durchlichtbeleuchtungsstrahlengangs freigegeben werden, während bei der Funktion "Shutter eingeschaltet" dieser Bereich lichtundurchlässig gemacht wird.

### Bezugszeichenliste

- 1: Mikroskop
- 2: Auflicht-Fluoreszenzbeleuchtungseinrichtung
- 3: Durchlicht-Hellfeldbeleuchtungseinrichtung
- 4: Weißlicht-LED
- 5: Beleuchtungsoptik
- 6: Shutter
- 7: Durchlichtbeleuchtungsachse
- 8: Umlenkspiegel
- 9: Mikroskoptisch
- 10: Probe
- 11: Objektiv
- 12: Fluoreszenzfilterblock
- 13: Strahlteiler
- 14: Anregungsfilter
- 15: Sperrfilter
- 16: Auflichtbeleuchtungsachse
- 17: Auflichtbeleuchtungslichtquelle
- 18: optische Achse
- 19: Okular
- 20: Fokussierknopf
- 21: Kameraport
- 22: Kamera
- 23: Tubus
- 24: Stativ
- 25: Lampenhaus
- 27: Steuergerät
- 28: Motor

## Patentansprüche

1. Verfahren zur Beleuchtung einer Probe (10) in einem Mikroskop (26), wobei die Probe (10) sowohl mit einer Durchlicht-Hellfeldbeleuchtungseinrichtung als auch alternativ einer Auflicht-Fluoreszenzbeleuchtungseinrichtung beleuchtet wird,
- wobei als Lichtquelle für die Durchlicht-Hellfeldbeleuchtung eine Weißlicht-LED (4) verwendet wird,
- wobei beim Aktivieren der Auflicht-Fluoreszenzbeleuchtungseinrichtung zwangsweise ein Shutter (6) an einem Ort des Beleuchtungsstrahlengangs der Durchlicht-Hellfeldbeleuchtungseinrichtung auch bei ausgeschalteter Weißlicht-LED (4) der Durchlicht-Hellfeldbeleuchtungseinrichtung eingeschaltet wird, der eine Anregung der Weißlicht-LED (4) durch das Auflicht der Auflicht-Fluoreszenzbeleuchtungseinrichtung verhindet,
- und wobei beim Aktivieren der Durchlicht-Hellfeldbeleuchtungseinrichtung dieser Shutter (6) zwangsweise ausgeschaltet wird.

2. Verfahren nach Anspruch 1, **dadurch gekennzeichnet, dass** der Shutter (6) an einem Ort unmittelbar vor der Weißlicht-LED (4) eingeschaltet wird.

3. Verfahren nach Anspruch 1 oder 2, **dadurch gekennzeichnet, dass** der Shutter mittels einer mechanischen Zwangskopplung automatisch ein- oder ausgeschaltet wird.

4. Verfahren nach einem der Ansprüche 1 bis 2, **dadurch gekennzeichnet, dass** der Shutter (6) mittels eines Motors (28) betrieben wird, der den Shutter (6) automatisch ein- bzw. ausschaltet.

5. Mikroskop (1) zur Untersuchung einer Probe (10) in Durchlicht-Hellfeldbeleuchtung
oder in Auflicht-Fluoreszenzbeleuchtung mit
einer Durchlicht-Hellfeldbeleuchtungseinrichtung (3) und
einer Auflicht-Fluoreszenzbeleuchtungseinrichtung (2)
wobei als Lichtquelle für die Durchlicht-Hellfeldbeleuchtungseinrichtung eine Weißlicht-LED (4) vorhanden ist,
wobei ein Shutter (6) an einem Ort des Beleuchtungsstrahlengangs der Durchlicht-Hellfeldbeleuchtungseinrichtung (3) angeordnet ist, und mit einem Steuergerät (27), das mit der Durchlicht-Hellfeldbeleuchtungseinrichtung (3) und mit der Auflicht-Fluoreszenzbeleuchtungseinrichtung (2) derart in Wirkverbindung steht, dass bei Betrieb der Auflicht-Fluoreszenzbeleuchtungseinrichtung (2) der Shutter (6) auch bei ausgeschalteter Weißlicht-LED (4) der Durchlicht-Hellfeldbeleuchtungseinrichtung zwangsweise eingeschaltet wird und eine Anregung der Weißlicht-LED (4) durch das Auflicht der Auflicht-Fluoreszenzbeleuchtungseinrichtung verhindert und bei Betrieb der Durchlicht-Hellfeldbeleuchtungseinrichtung (3) der Shutter (6) zwangsweise ausgeschaltet wird.

6. Mikroskop (1) nach Anspruch 5, **dadurch gekennzeichnet, dass** die Weißlicht-LED (4) sowie der Shutter (6) in einem Lampenhaus (25) angeordnet sind, wobei das Lampenhaus (25) zur Einkoppelung des Beleuchtungsstrahlengangs der Durchlicht-Hellfeldbeleuchtungseinrichtung in das Mikroskop (26) mit diesem verbindbar ist.

7. Mikroskop (1) nach Anspruch 6, **dadurch gekennzeichnet, dass** das Steuergerät (27) mit einem im Lampenhaus (25) untergebrachten Motor (28) in Wirkverbindung steht, um den motorbetriebenen Shutter (6) zwangsweise ein- bzw. auszuschalten.

## Claims

1. Method for illuminating a sample (10) in a microscope (26), wherein the sample (10) is illuminated using both a transmitted light bright field illumination device and, alternatively, a reflected light fluorescence illumination device,
- wherein a white light LED (4) is used as a light source for the transmitted light bright field illumination,
- wherein a shutter (6) is forcibly activated at a location of the illumination beam path of the transmitted light bright field illumination device when the reflected light fluorescence illumination device is activated, even if the white light LED (4) is deactivated, said shutter preventing an excitation of the white light LED (4) by the incident light of the reflected light fluorescence illumination device,
- and wherein this shutter (6) is forcibly deactivated when activating the transmitted light bright field illumination device.

2. Method according to Claim 1, **characterized in that** the shutter (6) is activated at a location immediately upstream of the white light LED (4).

3. Method according to Claim 1 or 2, **characterized in that** the shutter is automatically activated or deactivated by means of forced mechanical coupling.

4. Method according to any one of Claims 1 and 2, **characterized in that** the shutter (6) is operated by means of a motor (28), which automatically activates or deactivates the shutter (6).

5. Microscope (1) for examining a sample (10) in transmitted light bright field illumination
or in reflected light fluorescence illumination, comprising
a transmitted light bright field illumination device (3) and
a reflected light fluorescence illumination device (2),
wherein a white light LED (4) is present as a light source for the transmitted light bright field illumination device,
wherein a shutter (6) is arranged at a location of the illumination beam path of the transmitted light bright field illumination device (3), and comprising a controller (27) that has an operational connection to the transmitted light bright field illumination device (3) and to the reflected light fluorescence illumination device (2) in such a way that the shutter (6) is forcibly activated during the operation of the reflected light fluorescence illumination device (2), even in the case of a deactivated white light LED (4) of the transmitted light bright field illumination device, and prevents an excitation of the white light LED (4) by the incident light of the reflected light fluorescence illumination device, and that the shutter (6) is forcibly deactivated during the operation of the transmitted light bright field illumination device (3).

6. Microscope (1) according to Claim 5, **characterized in that** the white light LED (4) and the shutter (6) are arranged in a lamphouse (25), wherein, for the purpose of coupling the illumination beam path of the transmitted light bright field illumination device into the microscope (26), the lamphouse (25) is connectable to the latter.

7. Microscope (1) according to Claim 6, **characterized in that** the controller (27) is operatively connected to a motor (28) housed in the lamphouse (25), for forced activation or deactivation of the motor-driven shutter (6).

## Revendications

1. Procédé d'éclairage d'un échantillon (10) dans un microscope (26), l'échantillon (10) étant éclairé à la fois avec un dispositif d'éclairage diascopique à fond clair et également, en variante, avec un dispositif d'éclairage à fluorescence épiscopique,
- une DEL à lumière blanche (4) étant utilisée en tant que source de lumière pour l'éclairage diascopique à fond clair,
- lors de l'activation du dispositif d'éclairage à fluorescence épiscopique, un obturateur (6) étant activé de manière forcée à un endroit de la trajectoire du faisceau d'éclairage du dispositif d'éclairage diascopique à fond clair, également lorsque la DEL à lumière blanche (4) du dispositif d'éclairage diascopique à fond clair est éteinte, lequel obturateur empêche une excitation de la DEL à lumière blanche (4) par la lumière incidente du dispositif d'éclairage à fluorescence épiscopique,
- et lors de l'activation du dispositif d'éclairage diascopique à fond clair, cet obturateur (6) étant désactivé de manière forcée.

2. Procédé selon la revendication 1, **caractérisé en ce que** l'obturateur (6) est activé à un endroit directement avant la DEL à lumière blanche (4).

3. Procédé selon la revendication 1 ou 2, **caractérisé en ce que** l'obturateur est activé ou désactivé automatiquement au moyen d'un accouplement mécanique forcé.

4. Procédé selon l'une quelconque des revendications 1 à 2, **caractérisé en ce que** l'obturateur (6) est entraîné au moyen d'un moteur (28) qui active et désactive automatiquement l'obturateur (6).

5. Microscope (1) pour examiner un échantillon (10) par éclairage diascopique à fond clair ou par éclairage à fluorescence épiscopique au moyen d'un dispositif d'éclairage diascopique à fond clair (3) et d'un dispositif d'éclairage à fluorescence épiscopique (2), une DEL à lumière blanche (4) étant prévue en tant que source de lumière pour le dispositif d'éclairage diascopique à fond clair (3),
un obturateur (6) étant disposé à un endroit de la trajectoire du faisceau d'éclairage du dispositif d'éclairage diascopique à fond clair, et comprenant un appareil de commande (27) qui est en liaison fonctionnelle avec le dispositif d'éclairage diascopique à fond clair (3) et avec le dispositif d'éclairage à fluorescence épiscopique (2) de telle sorte que pendant le fonctionnement du dispositif d'éclairage à fluorescence épiscopique (2), l'obturateur (6) soit activé de manière forcée même lorsque la DEL à lumière blanche (4) du dispositif d'éclairage diascopique à fond clair est éteinte et qu'une excitation de la DEL à lumière blanche (4) par la lumière incidente du dispositif d'éclairage à fluorescence épiscopique soit empêchée et que pendant le fonctionnement du dispositif d'éclairage diascopique à fond clair (3), l'obturateur (6) soit désactivé de manière forcée.

6. Microscope (1) selon la revendication 5, **caractérisé en ce que** la DEL à lumière blanche (4) ainsi que l'obturateur (6) sont disposés dans un boîtier de lampe (25), le boîtier de lampe (25), pour le couplage de la trajectoire du faisceau d'éclairage du dispositif d'éclairage diascopique à fond clair dans le microscope (26), pouvant être connecté à ce dernier.

7. Microscope (1) selon la revendication 6, **caractérisé en ce que** l'appareil de commande (27) est en liaison fonctionnelle avec un moteur (28) monté dans le boîtier de lampe (25), afin d'activer et de désactiver de manière forcée l'obturateur (6) motorisé.
